Europäisches Patentamt

European Patent Office

Office européen des brevets

(19)

(11) Publication number: **0 379 636**

**A1**

# EUROPEAN PATENT APPLICATION

(21) Application number: 89115685.3

(22) Date of filing: 25.08.89

(51) Int. Cl.⁵: **F16J 15/10**

(30) Priority: 08.09.88 GB 8821062

(43) Date of publication of application:
01.08.90 Bulletin 90/31

(84) Designated Contracting States:
**BE DE ES FR IT NL SE**

(71) Applicant: **T&N TECHNOLOGY LIMITED**
**Cawston House Cawston**
**Rugby Warwickshire, CV22 7SB(GB)**

(72) Inventor: **Atkinson, Alan William**
**11 Brackendale Drive**
**Barby Rugby CV23 9TJ(GB)**
Inventor: **Walsh, Melanie Jane**
**46 Greenway**
**Braunston Northants, N11 7JT(GB)**

(74) Representative: **Crux, John Anthony et al**
**Bowdon House Ashburton Road West**
**Trafford Park**
**Manchester M17 1RA(GB)**

(54) Improvements in and relating to gasket materials.

(57) Sheet gasket material comprises at least one gasket material layer made from a flake or lamellar form material selected from the group consisting of expanded graphite, vermiculite and mica, and a reinforcement layer, wherein the reinforcement layer comprises a sheet of high modulus thermoplastics polymer fibres. The gasket material layer is preferably essentially free from elastomeric binders.

EP 0 379 636 A1

## Improvements in and relating to gasket materials

This invention is concerned with the production of improved gasket materials in sheet form. Known gasket materials such as graphite foil made from expanded (exfoliated) graphite and sheet products comprising vermiculite have excellent properties for gasket applications. However, these applications are severely limited by the relatively low strength of the material and its lack of toughness. Frangibility and lack of tear resistance are particular problems.

It is known to reinforce sheet form gasket materials with a metal core sheet, typically made from plain or pierced metal or from wire mesh. These reduce the flexibility of the end product and of course have a significant effect on its weight as well as on the cost of manufacture. Very thin nickel foils are particularly useful as reinforcements because of their combined temperature and chemical resistance. The product is very flexible and easy to cut into gaskets. However, the use of nickel foil is expensive, which precludes its use from certain applications. There are many cases where a reinforcement with a lower operating temperature and lower production cost than nickel foil would be useful.

Various other proposals are known for the reinforcement of graphite foils. Materials which have been suggested include paper, heat resistant fibres such as aromatic polyamides or steel fibres, carbon fibre sheet, rubber, polyester film, glass cloth, asbestos paper, polyethylene powder and polyethylene sheet. The disadvantage of these materials lies mainly in the fact that relatively large amounts of adhesive, usually in the form, of elastomeric binders, are required to bond them to the graphite. In the case of paper enough binder must normally be applied to thoroughly saturate the paper: this results in an undesirably large organic content in the final product. Carbon fibre reinforcements are of course relatively expensive. The use of polymeric materials such as polyethylene film and elastomers is unsatisfactory because of their low modulus. Tensile loading of such laminates results in stretching of the polymer and cracking of the graphite foil.

Common to the use of metallic reinforcements (other than very thin foils) is the fact that the end product becomes stiff and relatively difficult to cut with simple tooling.

It is an object of the present invention to provide an improved sheet form gasket material.

According to the present invention, a sheet gasket material comprises at least one gasket material layer made from a flake or lamellar-form mineral selected from the group consisting of expanded graphite, vermiculite and mica and a reinforcement layer is characterised in that the reinforcement layer comprises a sheet of high modulus thermoplastics polymer fibres. The gasket material layer may be an expanded graphite foil, or a foil made from or including vermiculite and/or mica. A particularly preferred reinforcement layer comprises polyethylene fibres and it is particularly preferred that the reinforcement layer constitutes less than 20% of the total weight of the end product. The layers are preferably bonded together by hot pressing and/or calendering in the absence of elastomeric binders. However, minor amounts of adhesive may be used if necessary.

Definition of the modulus of a polymeric material presents certain difficulty because the stress/strain curves are often far from linear and accordingly modulus must therefore be defined in terms of specified strain values. For present purposes, modulus is measured at 1% strain.

Secondly many polymers undergo creep under prolonged tension. For present purposes modulus should be measured at a strain rate in the range $10\text{-}50\times10^{-3}$ min$^{-1}$.

Thirdly many polymeric products and sheets of various kinds made from them are anisotropic and as a result will exhibit different moduli in different directions. If such products are used as reinforcements then the end product will also have direction-dependant properties. For many applications the greatest possible isotropy is preferred. Accordingly for the purposes of this specification modulus refers to the minimum modulus measured in any direction in which the final product shall be subjected to tensile loading.

The conventional definition of modulus is in terms of force per unit area. However, in the case of a fibrous product, the concept of cross-sectional area is of limited value because only part of the space contains material; the rest is empty space. In order to overcome this, it is appropriate to use the specific modulus which is Young's modulus divided by the bulk density, in this case measured at a thickness no greater than three times that of the layer in the final laminate.

"High modulus" means for the purpose of this application a specific tensile modulus of at least 300 m$^2$/s$^2$ measured at 20°C, at 1% strain and at a strain rate of $10\text{-}50\times10^{-3}$ min$^{-1}$ in all directions in which the final laminate will be stressed in use. Fibres meeting these requirements include highly oriented thermoplastic polymers. A particularly preferred example is polyethylene that has been spun into fibres and hot-stretched to orient the long-chain molecules and thereby substantially increase the tensile modulus. Non-woven tissue made from such material is particularly effective although other materials such as polypropylene, polyvinylalcohol, and polyvinylacetate may also give good results.

The polymer material may also be formed into a film which is subsequently stretched and/or fibrillated to give a high-modulus fibrous network structure. Polyolefin sheet can be embossed and then subjected to a bi-axial stetching process which disrupts the sheet to form a net.

The preferred materials are thermoplastic and accordingly they can be bonded to the gasket material layer using little or no adhesive. A satisfactory bond can often be achieved by simply hot pressing or hot calendering. This not only reduces the product cost by eliminating the adhesive, but also it reduces the total organic content.

Gasket materials made according to the invention are significantly tougher than unreinforced graphite or vermiculite sheets, but they are still easy to cut into various shapes for gasket applications using scissors or a simple and inexpensive cutter such as a frame cutter.

By using high modulus fibres in accordance with this invention, adequate reinforcement can be achieved at minimal organic content, typically less than ten per cent by weight. Gaskets are of course frequently subjected to temperatures in excess of those which the high modulus inforcement layer can withstand. However, because the reinforcement layer only constitutes a small fraction of the overall gasket, its destruction does not lead to excessive loss of gasket stress and sealing performance. To put it in another way, gaskets are almost invariably never re-used and accordingly the fact that the reinforcement layer may be damaged in service does not matter.

In order that the invention be better understood preferred embodiments of it will now be described by reference to the following examples, of which examples 6 & 7 are comparative.

Example 1

A sheet of TYVEK (Registered Trade Mark) spun-bonded polyethylene fibre tissue weighing 40g/m² and having a specific modulus (see above) of 1088m²/s² was sandwiched between two sheets of FLEXICARB (Registered Trade Mark) graphite foil, of density 700kg/m³ and weighing 350g/m². The tensile strength of the foil was 4.5 MPa when measured at a density of 1000kgs/m³. The sandwich was hot pressed at 140-145°C at a pressure of 16 MPa for 10 seconds to yield a laminate of thickness 1 .0mm.

The organic content of the laminate was approximately 5.3%. It was very robust and easily resisted inadvertent tearing during handling.

Its high temperature sealing properties were tested by cutting annular rings that were used as gaskets to seal a pressure vessel. The gaskets were clamped between 4″ class 300lb flanges, with a surface finish 200 microinch CLA. The eight 3/4″ B16 stud bolts were tensioned to 30 kpsi residual bolt stress, using hydraulic tensioners. The vessel was filled with nitrogen gas to a pressure of 3.5 MPa (500 psi) at a temperature of 450°C. Over a 18 hour period, the pressure drop was only 70 kPa (10 psi) and the leakage rate $8.6 \times 10^{-9}$ kgs/s.

Example 2

Laminates were made from the same materials used in Example 1, but in this case by passing through a calender with rollers heated to approximately 100°C. Additional heating was provided by infrared elements mounted adjacent to the calender roller nips to generate temperatures in the region of 420°. The speed of throughput was approximately 0.15 m/s.

This treatment produced a laminate 0.8mm thick with similar properties to those given in Example 1.

Example 3

The procedure of Example 1 was repeated using DALTEX/COROVIN (Trade Mark) polypropylene fibre tissue of weight 75g/m² and specific modulus of 330m²/s². During hot pressing, the temperature was increased to 175° and the time to 15 seconds but the pressure remained at 16 MPa.

The product had a thickness of 0.96mm and a polymer content of approximately 9.4%. It was relatively tough, but inferior to the material from Example 1.

Example 4

The procedure of Example 1 was used to make a laminate from two sheets of vermiculite sealing material generally as described in Example 1 of GB-A 2,193,953, but with a thickness of 1.0mm; a density of 1100kg/m³, 1100g/m² and a tensile strength of 0.5 MPa when measured at a density of 1500kg/m³ and one sheet of the polyethylene fibre tissue. The temperature and time of hot pressing were 140°C and 120 seconds respectively.

The product was significantly tougher than the unreinforced vermiculite sheet. It resisted fracture on bending and showed improved tear resistance.

Example 5

The procedure of Example 1 was used to make a laminate from two sheets of a heat resistant paper (described in GB-A 2,138,855) of density 1300kg/m³, 0.7mm weight 890g/m² and tensile strength 6.5 MPa when measured at a density of 1300kgs/m³ and one sheet of polyethylene fibre tissue. The hot pressing conditions were 140°C and 30 seconds.

The product was significantly tougher and more tear resistant than the unreinforced paper.

Example 6

This example is given for purposes of comparison only. A laminate was prepared by hot pressing from two sheets of graphite foil (as used in Example 1) and a sheet of polyethylene film, density 0.96kg/m³, weight 52g/m² and specific modulus 228 m²/s².

The product offered few advantages over the unreinforced graphite foil. On tensile loading, the graphite fractured and the polyethylene stretched to such an extent that it provided no useful reinforcement.

Example 7

This example is also given for purposes of comparison only. Attempts were made at improving the toughness and tear resistance of graphite foil by dipping the foil into a range of polymeric latices (nitrile, acrylic, etc). The resulting coatings were dried and where appropriate, heat-cured to give a soft, rubbery consistency.

On applying a tensile load to the coated material, the graphite foil fractured and the coatings, because of their low moduli, underwent excessive stretching. They were unable to provide useful reinforcement.

**Claims**

1. A sheet gasket material comprising at least one gasket material layer made from a flake or lamellar-form mineral selected from the group consisting of expanded graphite, vermiculite and mica and a reinforcement layer, characterised in that the reinforcement layer comprises a sheet of high modulus thermoplastics polymer fibres.

2. A gasket material according to claim 1, characterised in that the gasket material layer is essentially free from elastomeric binders.

3. A gasket material according to claim 1, characterised in that the gasket material layer is a foil of expanded graphite.

4. A gasket material according to claim, characterised in that the gasket material layer is a foil made from vermiculite.

5. A gasket material according to any of claims 1-4, characterised in that the reinforcement layer comprises polyethylene fibres.

6. A gasket material according to any preceding claim, characterised in that the reinforcement layer constitutes less than 20% of the total weight of the material.

7. A gasket material according to any preceding claim, characterised in that the layers are bonded by hot pressing and/or calendering in the absence of adhesive.

8. The use of the material of any preceding claim as a gasket.

9. A non-asbestos gasket material in the form of a laminate sheet comprising at least one gasket material layer made from a flake or lamellar-form mineral selected from the group consisting of expanded graphite, vermiculite and mica and a reinforcement layer, characterised in that the reinforcement layer comprises a sheet of thermoplastics fibres having a specific tensile modulus of at least 300m²/s² (measured at 20°C at 1% strain and at a strain rate of $10\text{-}50 \times 10^{-3}$ min$^{-1}$) in all directions in which the laminate sheet will be stressed.

10. A non-asbestos gasket material according to claim 8, characterised in that the thermoplastics fibres have been subjected to a hot stretching treatment.

11. A non-asbestos gasket material according to claim 9 or claim 10, characterised in that the thermoplastics fibres are selected from the group consisting of polyethylene, polypropylene, polyvinylalcohol or polyvinylacetate fibres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 353 770 (GRACE) * Page 2, left-hand column, paragraph 1 - page 4, left-hand column, paragraph 1 * | 1 | F 16 J 15/10 |
| A | | 4 | |
| Y | EP-A-0 155 083 (FLEXITALLIC) * Whole document * | 1 | |
| A | | 2,6,7 | |
| A | FR-A-2 308 843 (PECHINEY) * Whole document * ----- | 1 | |

TECHNICAL FIELDS SEARCHED (Int. Cl.5)

F 16 J

The present search report has been drawn up for all claims

| Place of search | Date of completion of the search | Examiner |
|---|---|---|
| THE HAGUE | 29-12-1989 | LEGER M.G.M. |

EPO FORM 1503 03.82 (P0401)